# EUROPÄISCHE PATENTANMELDUNG

(11) **EP 2 562 143 A1**
(43) Veröffentlichungstag der Anmeldung: **27.02.2013**
(21) Anmeldenummer: 12181123.6
(22) Anmeldetag: 21.08.2012
(51) Int. Cl.: C03C 3/091

(54) **Borosilikatglaszusammensetzung für die Herstellung von Glasrohren und seine Verwendung für die Herstellung von Glasrohren und als Hüllrohr für Lampen**

(30) Priorität: 25.08.2011 DE 102011081532
(71) Anmelder: Schott AG, 55122 Mainz (DE)
(72) Erfinder: Dick, Erhard, 95701 Pechbrunn (DE); Fechner, Dr. Joerg Hinrich, 55118 Mainz (DE)

(57) **Zusammenfassung**

Es wird eine Glaszusammensetzung und ihre Verwendung zur Herstellung von Glasrohren vorgeschlagen. Die Glasrohre dieser Zusammensetzung eignen sich in besonderer Weise für die Hüllrohre von Fluoreszenzlampen, bei denen eine Phosphorschicht bei Temperaturen bis 700 °C eingebrannt wird. Rohre aus dem erfindungsgemäßen Glas neigen bei ihrer Verarbeitung bei hohen Temperaturen weniger zur Verformung und zum aneinander Kleben. Für die beobachteten Effekte ist u.a. das Molverhältnis von Na₂O / (Na₂O + K₂O) wesentlich, das größer als 0,4 und maximal 0,72 betragen soll. Die Glaszusammensetzung ist in mol% wie folgt: 74-81 SiO₂; 8,5-14,5 B₂O₃; 0,5-3,5 Al₂O₃; 1,5-3,5 Na₂O; 1-2 K₂O; 0-1 Li₂O; 0,5-1,5 MgO; 0,5-1,5 CaO; 0-0,6 BaO; 2-3,5 TiO₂; 0-1 ZrO₂; 0-0,15 Sb₂O₃; 0-0,5 CeO₂; 0-0,5 SnO₂.

## Beschreibung

Die Erfindung betrifft eine Glaszusammensetzung mit optimierten Verarbeitungseigenschaften, wie sie insbesondere für die Herstellung von Hüllrohren für Fluoreszenzlampen vorteilhaft sind und die Verwendung dieses Glases für die Herstellung von Rohren und für Lampenhüllrohre.

Ein weit verbreiteter Typus von Fluoreszenzlampen arbeitet nach dem Prinzip der Niederdruckgasentladung. Dabei wird in einen evakuierten Hohlraum eine geringe Menge Quecksilber und ein Edelgas enthaltendes Gasgemisch eingebracht. Die Quecksilberatome werden angeregt und geben daraufhin ultraviolette Strahlung (UV) ab. Diese wird von einer Phosphorbeschichtung, die üblicherweise auf der Behälterinnenseite aufgebracht ist, in sichtbares Licht umgewandelt. Der gasgefüllte Behälter wird vorzugsweise als langestreckte, dünne, zylindrische Röhre ausgeführt und dessen Wände aus für sichtbares Licht möglichst transparenten Gläsern ausgeführt. Miniaturisierte Fluoreszenzlampen von einigen wenigen Millimetern Außendurchmesser werden häufig zur Hintergrundbeleuchtung in Bildschirmen und anderen Anzeigeelementen eingesetzt. Die erwähnte Phosphorbeschichtung wird auf der innen liegenden Oberfläche der Glasröhre eingebrannt. Entsprechende Fluoreszenzlampen werden daher auch als Leuchtstofflampen bezeichnet.

Die bei der Lampenherstellung, insbesondere beim Einbrennen der Phosphorschicht erreichten Temperaturen können zeitweise bis zu ca. 700 °C betragen. Solche Temperaturen liegen üblicherweise deutlich über dem Transformationspunkt der meisten Gläser, die für solche Zwecke eingesetzt werden. Dabei nimmt die Festigkeit und Stabilität des Glases ab.

Die beim Einbrennen der Phosphorschicht erforderlichen hohen Temperaturen liegen zum Teil bis ca. 150 °C über dem Glastransformationspunkt der üblicherweise für diesen Zweck verwendeter Gläser. Durch die hohe Einbrenntemperatur verändert sich die Glasstruktur der eingesetzten Gläser was zu geometrischen Veränderungen als auch zu Veränderungen der Glasoberfläche führen kann. Bei der Verarbeitung der Glasrohre zu Fluoreszenzlampen können diese durch Schrumpfung ihre Länge ändern, krumm werden oder einander berührende Glasrohre kleben an den Berührungsstellen aneinander. All diese unerwünschten Effekte sind für die in der Regel hoch automatisierten Prozesse bei der Lampenherstellung höchst unerwünscht und störend.

Es ist daher Aufgabe der vorliegenden Erfindung, eine Glaszusammensetzung bereit zustellen, die mit gängigen Verfahren, wie dem Vello-Verfahren oder dem Danner-Verfahren zu Glasrohren gezogen werden kann, wobei diese Glasrohre bei Weiterverarbeitungstemperaturen bis zu 700 °C möglichst wenig zur Geometrieveränderung (Schrumpfung und Krümmung) und zum aneinander Kleben neigen sollen.

Gelöst wird diese Aufgabe durch die im Anspruch 1 angegebene Glaszusammensetzung (ohne abweichende Bezeichnung sind die Angaben zu den Anteilen in mol.% auf Oxidbasis).

Der Gehalt an Siliziumdioxid SiO₂ beträgt 74 - 81 mol.%.

Der Anteil des Boroxid B₂O₃ beträgt 8,5 - 14,5 mol.%. Dieser Borgehalt ist im Verhältnis zu sonst für die Herstellung der Hüllrohre von Fluoreszenzlampen, wie insbesondere Niederdruckgasentladungslampen verwendeten Gläsern relativ gering. Dies wirkt sich einerseits günstig auf die Rohstoff- und Herstellkosten aus, vermindert andererseits aber auch das oben erwähnte aneinander Kleben (im Englischen auch als "Sticking" bezeichnet) der Kontaktstellen von einander berührenden Glasrohren. Es wurde festgestellt, dass das aneinander Kleben der Glasoberflächen besonders stark auftritt, wenn an der Glasoberfläche Anreicherungen von Bor vorliegen. Durch die Wahl eines relativ geringen Borgehalts wird dieser Effekt vermindert.

Der Anteil des Aluminiumoxid Al₂O₃ beträgt 0,5 - 3,5 mol.%.

Als Alkalioxide weist das erfindungsgemäße Glas Natriumoxid Na₂O in Anteilen von 1,5 - 3,5 mol.% und Kaliumoxid K₂O in Anteilen von 1,0 - 2,0 mol.% auf. Optional kann das Glas auch geringe Anteile von Lithiumoxid enthalten, vorzugsweise 0 - ca. 1 mol.%. Da Lithiumoxid im Verhältnis zu den Oxiden von Natrium und Kalium ein relativ teurer Rohstoff ist, wird man dessen Anteil bevorzugt gering halten.

Als Erdalkalioxide liegen vor: Magnesiumoxid MgO in Anteilen von 0,5 - 1,5 mol.%, Kalziumoxid CaO mit ebenfalls 0,5 - 1,5 mol.%, während Bariumoxid BaO lediglich optional in Anteilen von 0 - 0,6 mol.% enthalten sein kann.

Das unter anderem auf die UV-Transmission eines Glases einwirkende Titandioxid TiO₂ liegt in Anteilen von 2,0 - 3,5 mol.% vor.

Optional kann darüber hinaus ein Anteil von 0 - 1,0 mol.% Zirkondioxid ZrO₂ in dem erfindungsgemäßen Glas vorliegen. ZrO₂ erhöht die Beständigkeit des erfindungsgemäßen Glases gegen den Angriff von Wasser.

Dem erfindungsgemäßen Glas können darüber hinaus übliche Läutermittel in üblichen Mengen zugegeben werden. Dafür kommen insbesondere in Frage Antimonoxid Sb₂O₃ in Anteilen von 0-0,15 mol.% und/oder Ceroxid CeO₂ in Anteilen von 0 - 0,5 mol.%, sowie Zinnoxid SnO₂ ebenfalls in Anteilen von 0 - 0,5 mol.%. Unterstützend oder stattdessen können der Glasschmelze auch übliche flüchtige Läutermittel wie Chloride und Sulfate zugesetzt werden. Bevorzugt wird eine arsenfreie Läuterung des Glases durchgeführt, wodurch das Glas bevorzugt kein Arsenoxid As₂O₃ aufweist. Beim Einsatz von Antimonoxid zur Läuterung titanhaltiger Gläser führt dies aufgrund seines hohen Oxidationspotentials nicht zu unerwünschten Verfärbungen des Glases. Eine Bildung von unerwünschtem Ilmenit (FeO·TiO₂) wird dadurch stark minimiert.

Viele Ausgangs- bzw. Rohstoffe für die Herstellung einer Glasschmelze enthalten als Beimengung oder Verunreinigung Eisenoxid Fe₂O₃. Der Eisengehalt des Glases (auf Oxidbasis) wird bevorzugt auf eine Höchstmenge von maximal 300 ppm beschränkt.

Kaltkathodenleuchtstofflampen werden beispielsweise mit außenliegenden Elektroden ausgeführt (so genannter EEFL-Typ ; External Electrode Fluorescence Lamp) oder mit innenliegenden Elektroden (so genannter CCFL-Typ ; Cold Cathode Fluorescence Lamp). Insbesondere bei Lampen mit innenliegenden Elektroden müssen die metallischen Elektroden bzw. ihre metallischen Anschlussdrähte gasdicht durch das Hüllrohr geführt und mit diesem verbunden werden. Um bei größeren Temperaturänderungen eine Zerstörung der Lampe durch an den Verbindungsstellen auftretende Spannungen zu vermeiden, müssen die Ausdehnungskoeffizienten der beiden Verbindungspartner Metall und Glas aufeinender abgestimmt werden. Die erfindungsgemäßen Gläser der vorliegenden Zusammensetzung sind insbesondere für die Verschmelzung mit Wolfram geeignet, welches häufig als Material für die Durchführungen eingesetzt wird. Ihr mittlerer Temperaturausdehnungskoeffizient α liegt zwischen 20 und 300°C bevorzugt in dem Bereich von 3,4 bis 4,3 x 10⁻⁶/K.

Es ist bekannt, dass Alkaliionen aufgrund ihrer geringen Größe in der Glasstruktur eine höhere Beweglichkeit aufweisen als viele andere Komponenten des Glases. Es ist auch bekannt, dass die verschiedenen Alkalien relativ zueinander eine unterschiedliche Beweglichkeit aufweisen. Insbesondere bei hohen Temperaturen, großen Temperaturwechseln, bzw. großen Temperaturgradienten, wie sie beispielsweise beim Einbrennen einer Phosphorschicht auftreten können, kann es zu einer verstärkten Migration von Alkaliionen in der Glasstruktur kommen. Insbesondere durch lokale Inhomogenitäten der Alkaliverteilung an der Glasoberfläche können diese Phänomene ursächlich für die unerwünschte Schrumpfung oder das Aneinanderkleben des Glases sein. Es wurde gefunden, dass man besonders günstige Verarbeitungseigenschaften des Glases erhält, wenn das Molverhältnis von Na₂O zu (Na₂O+K₂O) im Intervall von > 0,4 und ≤ 0,72 liegt. Als Obergrenze für das genannte Molverhältnis wird ein Wert < 0,70 bevorzugt.

Das Verhältnis der Alkaligehalte beeinflusst bei gegebener Temperatur auch die Viskosität η eines Glases. Die Temperatur, bei der log (η/dPas) = 12 ist, wird als Erweichungspunkt bezeichnet. Bei den erfindungsgemäßen Gläsern liegt er bevorzugt bei mindestens 570 °C, wobei der Bereich von 580 - 620 °C besonders bevorzugt wird. Hohe Erreichungspunkte sind wünschenswert für die Formstabilität und die Verarbeitungseigenschaften von Glasrohren, insbesondere bei Hochtemperaturprozessen.

Die Verarbeitungstemperatur VA, definiert als die Temperatur, bei der die Viskosität η 10⁴ dPas beträgt, liegt bevorzugt bei mindestens 1170 °C.

Für die Glasherstellung ist neben den Alkalimetallen Natrium und Kalium auch Lithium, bzw. seine Verbindungen ein möglicher Rohstoff. Der Quotient B₂O₃ /(B₂O₃ + Σ Alkalioxide) hat einen deutlichen Einfluss auf die Verdampfungsrate einer Glasoberfläche bei hohen Temperaturen, wie etwa dem Schmelzen und der Heißformgebung, z.B. dem Ziehen von Glasrohren nach dem Danner- oder Vello-Verfahren. Für die erfindungsgemäßen Gläser ist der Quotient bevorzugt < 0,76, besonders bevorzugt sind Werte von 0,6 - 0,7. Durch einen ungünstig eingestellten Quotienten kann die Verarbeitung der Gläser, z.B. bei der Lampenherstellung insbesondere durch Aneinanderkleben von erhitzten Glasoberflächen nachteilig beeinflusst werden.

Eine weitere Kennzahl zur Beeinflussung bzw. Beschreibung des Verdampfungsgrades, speziell von Alkaliboraten, einer freien Glasoberfläche ist gegeben durch das Produkt (B₂O₃ • Σ Alkalioxide). Sie liegt bevorzugt zwischen 45 und 65.

Das Molverhältnis von Si₂O₃ / Al₂O₃ ist maßgebend für das Schmelzverhalten des Glases. Je größer der Quotient ist, desto leichter schmelzbar ist das Glas. Für die vorliegenden erfindungsgemäßen Gläser ist es bevorzugt < 105, insbesondere 70 - 100.

Um eine möglichst schnelle und gleichmäßige Wärmeaufnahme zu gewährleisten, wie sie beispielsweise beim Aufheizvorgang für den Einbrennprozess der Phosphorbeschichtung erforderlich ist, werden für die Wärmeleitfähigkeit Mindestwerte von mehr als 0,97 W/m.K bevorzugt.

Das Molverhältnis aus der Summe der Erdalkalioxide zur Summe der Alkalioxide gibt dem Fachmann Hinweise auf die Glasstruktur und zu den Bindungsverhältnissen. Der Quotient aus den beiden genannten Summen ist bevorzugt größer als 0,35 aber nicht größer als 0,8.

Eine weitere, die Schmelzbarkeit eines Glases beeinflussende Kennzahl ergibt sich aus dem Molverhältnis von Aluminiumoxid zur Summe der Alkalioxide. Der Quotient von Al₂O₃ / (Na₂O + K₂O + Li₂O) liegt bevorzugt zwischen 0,15 und 0,6. In den beiden nachfolgenden Tabellen werden fünf Beispiele für Zusammensetzungen erfindungsgemäßer Gläser und deren wichtige Eigenschaften und Kennzahlen angegeben. Alle Anteile sind in mol.% auf Oxidbasis angegeben.

| Proben-Nr. | 1 | 2 | 3 | 4 | 5 |
|---|---|---|---|---|---|
| SiO₂ | 76,9 | 74,8 | 75,9 | 80,1 | 76,8 |
| B₂O₃ | 13,1 | 14,3 | 13,6 | 9,4 | 9,9 |
| Al₂O₃ | 0,74 | 2,2 | 1,1 | 0,9 | 2,2 |
| Na₂O | 3,24 | 1,75 | 2,85 | 3,00 | 3,25 |
| K₂O | 1,27 | 1,83 | 1,40 | 1,32 | 1,67 |
| Li₂O | 0 | 0,84 | 0 | 0,83 | 0,84 |
| MgO | 0,62 | 0,62 | 1,40 | 0,62 | 0,94 |
| CaO | 0,78 | 0,80 | 1,00 | 1,44 | 1,13 |
| BaO | 0 | 0,46 | 0,33 | 0 | 0 |
| TiO₂ | 3,29 | 2,30 | 2,36 | 2,33 | 3,16 |
| Sb₂O₃ | 0,06 | 0,1 | 0,06 | 0,06 | 0,11 |
| SUMME | 100 | 100 | 100 | 100 | 100 |

| Proben-Nr. | 1 | 2 | 3 | 4 | 5 |
|---|---|---|---|---|---|
| VA [°C] | 1150 | 1170 | 1170 | 1190 | 1190 |
| Erweichungspunkt [°C] bei log(η)=12 | 585 | 570 | 610 | 580 | 570 |
| Tg [°C] | 520 | 515 | 525 | 530 | 520 |
| α (20-300°C) [10⁻⁶/K] | 3,8 | 3,8 | 3,9 | 4,1 | 4,3 |
| Wasserbeständigkeit | + | +++ | ++ | +++ | ++ |
| Einfluss des B₂O₃-Gehalts auf die Lampenherstellung | gering | höher | hoch | sehr gering | gering |
| Wärmeleitfähigkeit [W/m·K] | 0,972 | 1,031 | 1,029 | 1,047 | 0,991 |
| Na₂O/(Na₂O+K₂O) | 0,72 | 0,49 | 0,67 | 0,69 | 0,66 |
| B₂O₃/(B₂O₃+ Σ Alkalioxide) | 0,74 | 0,76 | 0,76 | 0,65 | 0,63 |
| B₂O₃ x (Na₂O+K₂O+Li₂O) | 59,1 | 63,3 | 57,8 | 48,4 | 57,0 |
| SiO₂/Al₂O₃ | 103,9 | 34,0 | 69,0 | 89,0 | 34,9 |
| Al₂O₃/(Na₂O+K₂O+Li₂O) | 0,16 | 0,50 | 0,26 | 0,17 | 0,38 |
| (CaO+MgO+BaO)/(Na₂O+K₂O+Li₂O) | 0,31 | 0,43 | 0,64 | 0,40 | 0,36 |
| CaO/(CaO+MgO) | 0,56 | 0,56 | 0,42 | 0,70 | 0,54 |

| | | | | | |
|---|---|---|---|---|---|
| Relative qualitative Bewertung der Wasserbeständigkeit des Glases: "+" gut ; "++" besser ; "+++" sehr gut. | | | | | |

Die in der Tabelle angegebenen Ausführungsbeispiele wurden alle mit Antimon als Läuterhilfsmittel geläutert. Alternativ kommen als Läuterhilfsmittel insbesondere auch Cer und Zinn in Frage, sowohl einzeln als auch in Kombination miteinander und in Kombination mit anderen üblichen Läutermitteln. Insbesondere bei Titan-haltigen Gläsern wird jedoch eine Läuterung mit Hilfe von Antimon bevorzugt.

## Patentansprüche

1. Borosilicatglas, das folgende Anteile aufweist (in mol.% auf Oxidbasis):
| | |
|---|---|
| SiO₂ | 74 - 81 |
| B₂O₃ | 8,5 - 14,5 |
| Al₂O₃ | 0,5 - 3,5 |
| Na₂O | 1,5 - 3,5 |
| K₂O | 1,0 - 2,0 |
| Li₂O | 0 - 1,0 |
| MgO | 0,5 - 1,5 |
| CaO | 0,5 - 1,5 |
| BaO | 0 - 0,6 |
| TiO₂ | 2,0 - 3,5 |
| ZrO₂ | 0 - 1,0 |
| sowie als Läutermittel | |
|---|---|
| Sb₂O₃ | 0 - 0,15 |
| CeO₂ | 0 - 0,5 |
| SnO₂ | 0 - 0,5 |
sowie einem Molverhältnis von 0,4 < Na₂O / (Na₂O + K₂O) ≤ 0,72.

2. Borosilicatglas nach Anspruch 1,
**gekennzeichnet durch**
ein Molverhältnis von 0,4 < Na₂O / (Na₂O + K₂O) < 0,70.

3. Borosilicatglas nach Anspruch 1 oder 2,
**dadurch gekennzeichnet,**
**dass** die Erweichungstemperatur, bei der log(η) = 12 ist, mindestens 570 °C beträgt, bevorzugt 580 - 620 °C.

4. Borosilicatglas nach wenigstens einem der Ansprüche 1 bis 3,
**dadurch gekennzeichnet,**
**dass** das Molverhältnis B₂O₃ / (B₂O₃ + Σ Alkalioxide) ≤ 0,76 ist, bevorzugt 0,6 bis 0,7.

5. Borosilicatglas nach wenigstens einem der Ansprüche 1 bis 4,
**dadurch gekennzeichnet,**
**dass** das Molverhältnis von SiO₂ / Al₂O₃ < 105 ist, bevorzugt 70 bis 100.

6. Borosilicatglas nach wenigstens einem der Ansprüche 1 bis 5,
**dadurch gekennzeichnet,**
**dass** seine Wämeleitfähigkeit > 0,97 W/m. K ist.

7. Borosilicatglas nach wenigstens einem der Ansprüche 1 bis 6,
**dadurch gekennzeichnet,**
**dass** das Molverhältnis (CaO + MgO + BaO) / (Li₂O + Na₂O + K₂O) > 0,35 bis maximal 0,8 ist.

8. Borosilicatglas nach wenigstens einem der Ansprüche 1 bis 7 mit einem thermischen Ausdehnungskoeffizienten α_{20/300} von 3,4 x 10⁻⁶/ K bis 4,3 x 10⁻⁶/K und einer Verarbeitungstemperatur VA von mindestens 1170 °C.

9. Borosilicatglas nach wenigstens einem der Ansprüche 1 bis 8,
**dadurch gekennzeichnet,**
**dass** das Produkt B₂O₃ • (Li₂O + Na₂O + K₂O) zwischen 45 und 65 liegt.

10. Borosilicatglas nach wenigstens einem der Ansprüche 1 bis 9,
**dadurch gekennzeichnet,**
**dass** das Molverhältnis Al₂O₃ / (Li₂O + Na₂O + K₂O) zwischen 0,15 und 0,6 liegt.

11. Verwendung des Borosilicatglases nach wenigstens einem der Ansprüche 1 bis 10 zur Herstellung von Glasrohren.

12. Verwendung des Borosilicatglases nach wenigstens einem der Ansprüche 1 bis 10 als Hüllrohr für Fluoreszenzlampen und Niederdruck-Gasentladungslampen.
